# EUROPEAN PATENT APPLICATION

(11) **EP 4 541 203 A1**
(43) Date of publication of application: **23.04.2025**
(21) Application number: 24206184.4
(22) Date of filing: 11.10.2024
(51) Int. Cl.: A23G 3/34

(54) **EDIBLE COMPOUND PROCESSABLE IN SHEETS**

(30) Priority: 17.10.2023 IT 202300021588
(71) Applicant: Modecor Italiana S.r.l., 21030 Cuvio (VA) (IT)
(72) Inventor: RENATI, Martino, 27023 CASSOLNOVO (PV) (IT); GOTTARDELLO, Paolo, 22070 APPIANO GENTILE (CO) (IT)
(74) Representative: Corradini, Corrado

(57) **Abstract**

An edible compound is described, comprising:
- a first fraction comprising one or more ingredients among: water and solvent,
- a second emulsifying fraction comprising one or more ingredients among lecithin, sucrose ester, polysorbate, cellulose, arabic gum, vegetable fibre, monoglycerides or diglycerides of fatty acids,
- a third fraction comprising one or more ingredients among: glycerol, sorbitol, propylene glycol and mannitol, oil and fat,
- a fourth dyeing fraction,
- a fifth fraction comprising one or more ingredients among: sugar, starch, shellac, beeswax, animal gelatine, fish gelatine, agar, guar gum, locust bean gum, tragacanth, cellulose, carrageenan, gum tragacanth, acacia gum, tara gum, gellan gum, xanthan gum, pectin, sodium alginate, calcium, potassium, ammonium, propan diol, calcium caseinate, sodium caseinate, vegetable protein isolate, tapioca flour, carboxymethylcellulose, hydroxypropylmethylcellulose, vanillin.

## Description

### TECHNICAL FIELD

The present invention relates to the field of decorations.

In particular, the invention relates to an edible compound, and to an edible sheet or an edible decoration obtained from such a compound which can be used for various kinds of decorations.

### PRIOR ART

As is known, nowadays the appearance of products is increasingly central from the point of view of attracting potential customers.

For this reason, it is becoming increasingly popular to use decorations which can give products a distinct aesthetic appeal.

For example, with particular reference to the food sector, the use of natural gold as a decorative element in various preparations and dishes, e.g., particularly cakes or other products of a confectionery nature, is now well known.

Presently, the gold used for this purpose is supplied in the form of sheets, known as gold leaf in the technical jargon of the field.

The production of such gold leaves involves first extracting the natural gold, a process which is particularly high-impact from an environmental point of view, and then processing it with specific techniques which allow to obtain said leaves.

The procurement of such gold leaves is limited and, of course, particularly expensive. Moreover, in some countries, the use of gold as a food decoration is restricted by law to only certain types of products, generally only to confectionery products.

More in general, other food preparations, including modelling chocolate, cigarette russe, royal icing and various wafers, are known to be used to make decorative elements. Although, such food preparations can be modelled more or less as desired, they are not adapted to obtain particularly thin sheets and/or decorations because they tend to break/disintegrate.

Therefore, a need is felt in the industry to have an alternative to natural gold sheet or leaf and in general to the food preparations used today as decoration which is free of the drawbacks described above.

In light of the above, it is an object of the present invention to meet this need.

It is a further object of the present invention to achieve the mentioned object within the scope of a simple and rational solution.

These and other objects are reached by the characteristics of the invention as set forth in the independent claims. The dependent claims outline preferred and/or particularly advantageous aspects of the invention.

### DISCLOSURE OF THE INVENTION

The invention, in particular, provides an edible compound comprising:
- a first fraction (e.g., liquid or substantially liquid) comprising one or more ingredients among: water and solvent,
- a second fraction (emulsifying agent, i.e., with emulsifying function) comprising one or more ingredients among: lecithin, sucrose ester, polysorbate, cellulose, arabic gum, vegetable fibre, monoglycerides or diglycerides of fatty acids,
- a third fraction (humectant and/or plasticiser, i.e., with wetting and/or plasticising function) comprising one or more of ingredients among: glycerol, sorbitol, propylene glycol mannitol, oil and fat,
- a fourth dyeing fraction (i.e., with a colouring function),
- a fifth fraction (e.g., substantially with a thickening function) comprising one or more ingredients among: sugar (e.g., one or more among glucose and/or, fructose and/or maltodextrin and/or sugar syrup and/or invert sugar), a starch (e.g., a native or modified starch) , shellac, beeswax, animal gelatine, fish gelatine, agar, guar gum, locust bean gum, tragacanth, cellulose, carrageenan, gum tragacanth, acacia gum, tara gum, gellan gum, xanthan gum, pectin, sodium alginate, calcium, potassium, ammonium, propan diol, calcium caseinate, sodium caseinate, vegetable protein isolate, tapioca flour, carboxymethylcellulose, hydroxypropylmethylcellulose, vanillin.

Thanks to this solution, the invention provides an edible compound, which can be easily processed to obtain sheets and decorations (i.e., decorative elements) in general with a particularly low thickness, for example with a thickness even less than one millimetre, for example to obtain sheets entirely similar in appearance to the natural gold sheets currently used in the food industry or sheets or decorations of any other desired colouring thanks to the fourth fraction of the compound.

Such a compound is also particularly stable over time thanks to the third fraction.

In practice, such a solution provides a compound which can be processed in sheets, thereby providing an alternative to natural gold sheets, by means of readily available ingredients and thus reproducible on a large scale and at a significantly lower cost with respect to the cost of raw material and the creation of natural gold sheets, or which can be processed to obtain sheets which are similar in appearance to metallic sheets (e.g., copper or bronze or aluminium or other metal).

Furthermore, such a solution provides an edible compound which can be used with particular ease and at the same time is effective for making decorations (or decorative elements) by means of screen-printing, possibly hot, or spray deposition.

In practice, the edible compound is particularly versatile in use, as it is compatible with a wide range of techniques for making edible sheets and/or decorations.

Furthermore, such a solution provides an edible compound which, depending on the ingredients chosen among those listed above, can possibly assume a different taste on the palate, thus being particularly versatile in various kinds of food applications.

Further, since the edible compound is of purely food-grade origin, it can be used on both sweet and savoury preparations, and can therefore be used to decorate/enrich certain preparations where the use of natural gold sheets is prevented by regulations.

For example, as sugar, the fifth fraction can comprise simple sugars such as mono- and di-saccharides and/or complex carbohydrates such as maltodextrins and starches. Preferably, as sugar, the fifth fraction can comprise one or more among glucose, fructose, maltodextrin, sugar syrup. invert sugar, a starch (e.g., native or modified starch). According to an aspect of the invention, the fourth fraction (dyeing) can comprise at least one ingredient such as a dye or colouring pigment.

In particular, an aspect of the invention envisages that the fourth fraction can comprise one or more ingredients, i.e., dyes and/or colouring pigments, in the group among: potassium silicate, aluminium silicate, silicon dioxide, iron oxide, mica, brilliant blue FCF (CAS No.: 3844-45-9), spirulina blue, aluminium, gold and silver.

Preferably, the fourth fraction can comprise at least one ingredient, i.e., a dye or colouring pigment, chosen among, silver, aluminium and mica.

Thanks to such a solution, the compound is provided with at least one dye, or at least one colouring pigment, which is particularly capable of giving it a metallic appearance.

For example, the fourth fraction can comprise (at least) mica.

Another aspect of the invention envisages that the first fraction can be present in a percentage by weight on the total weight of the compound comprised between 10% and 90%, e.g., preferably present in a percentage by weight greater than 60%, preferably in a percentage by weight on the total weight of the compound comprised between 60% and 70%.

Particularly, such a first fraction is liquid or substantially liquid.

Thanks to such a solution, the first fraction predominates on the total weight of the compound, giving it a consistency such as to be able to be easily handled and processed. Further, another aspect of the invention envisages that the second fraction (emulsifying agent) can be present in a weight percentage on the total weight of the compound comprised between 0.01 % and 5%.

A further aspect of the invention envisages that the fourth fraction (dyeing) can be present in a weight percentage on the total weight of the compound comprised between 2% and 70%, e.g., greater than 20%, preferably in a weight percentage on the total weight of the compound comprised between 20% and 30%.

Further, another aspect of the invention envisages that the fifth fraction can be present in a weight percentage on the total weight of the compound comprised between 10% and 90%, e.g., preferably comprised between 5% and 15%.

Another aspect of the invention envisages that the third fraction (humectant and/or plasticiser) can be present in a weight percentage on the total weight of the compound comprised between 0.01 % and 5%.

Thanks to such a solution, the quantity of the third fraction (humectant and/or plasticiser) is particularly low while still allowing the desired consistency of the compound to be maintained over time.

Further, another aspect of the invention envisages that the fifth fraction can comprise (e.g., only) xanthan gum, vanillin and one among sodium caseinate or calcium caseinate (for example preferably only one among sodium caseinate or calcium caseinate). Further, another aspect of the invention envisages that the fifth fraction can comprise (e.g., only) xanthan gum, animal gelatine, vanillin and one among sodium caseinate or calcium caseinate (for example preferably only one among sodium caseinate or calcium caseinate).

The invention further provides an edible sheet, obtained from a compound according to one or more of the aspects described above.

Thanks to such a solution, the invention provides a food sheet which can be easily shaped to define a desired shape and capable of effectively maintaining said shape over time.

In particular, thanks to the formulation of the compound, the resulting edible sheet has mechanical and chemical-physical properties which make it easy to shape in the most varying desired forms and at the same time particularly stable in maintaining the desired shape it is given and its colour.

For example, thanks to such a solution the invention provides an edible sheet which can be visually very similar to the natural gold sheet currently used in the industry for decorating confectionery products, particularly cakes and other pastry products, but which unlike natural gold can be reproduced on a large scale at a particularly low cost. Furthermore, thanks to such solution, a food sheet is provided which not only reproduces the aesthetic effect of natural gold sheets but, unlike the latter which is tasteless to the palate, can help to enrich the flavour of the product to which it is applied.

Furthermore, like natural gold sheets, thanks to such a solution it is possible to produce sheets capable of being visually completely similar to other types of metal sheets, e.g. bronze or aluminium or copper sheets, as part of a solution which is therefore particularly versatile.

Another aspect of the invention envisages that the edible sheet can have a thickness comprised between 0.005 mm and 2 mm, preferably substantially equal to 0.050 mm. Thanks to such a solution, the edible sheet can be easily cut to make decorative shapes in a wide variety of forms, making it particularly versatile in use.

The invention further provides a method for making an edible sheet or an edible decoration which envisages (e.g., in succession):
- preparing a compound according to one or more (e.g., all) of the aspects described above,
- heating the compound obtained at a temperature comprised between 50°C and 90°C, for a time comprised between 5 and 25 minutes,
- letting the edible compound rest for a period of time comprised between 2 and 30 hours, e.g. particularly so that the edible compound cools down to room temperature (i.e., down to a temperature comprised between 5°C and 35°C), in particular down to a temperature comprised between 5°C and 19°C,
- obtaining the edible sheet or the edible decoration from the edible compound.

Thanks to such a solution, following the rest period, a compound is obtained which substantially has a solid state, in particular it can for example substantially have the form of a dense gelatin, which can be easily processed to obtain the edible sheet.

In particular, obtaining the edible sheet or edible decoration from the edible compound can envisage:
- a processing step of the edible compound by means of a technique among hot rolling, cold rolling, extrusion, calendering and pad printing, so as to give the edible compound a desired shape,
- a subsequent step of drying and/or stabilisation by means of dehydration and/or cooking of the created shape.

Moreover, the invention provides another method for making an edible sheet or edible decoration which envisages (for example, in succession):
- preparing an edible compound according to one or more of the aspects described above,
- heating the edible compound obtained at a temperature comprised between 50°C and 90°C for a time comprised between 5 and 25 minutes,
- letting the edible compound rest for a period of time comprised between 2 and 30 hours, e.g., particularly so that the edible compound cools down to room temperature (i.e., down to a temperature comprised between 5°C and 35°C), in particular down to a temperature comprised between 5°C and 19°C,
- mixing the edible compound again, e.g., particularly so as to heat it by mechanical stirring or simultaneously heating it, up to a temperature of at least 20°C,
- obtaining the edible sheet or the edible decoration from the edible compound.

Thanks to such a solution, it is possible to obtain an edible compound in a substantially liquid and smooth (i.e., free of lumps) and homogeneous state, e.g. yoghurt-like consistency, which can be easily processed.

In particular, an aspect of the invention envisages that the step of obtaining the edible sheet or edible decoration from the edible compound can envisage:
- the step of selectively depositing the edible compound on a substrate, e.g., preferably a non-absorbent substrate, to give the edible compound a desired shape,
- a subsequent step of drying and/or stabilisation by means of dehydration and/or cooking of the created shape.

Thanks to such a solution, the method is particularly versatile.

In particular, the edible sheet or edible decoration can be obtained by means of a plurality of techniques which allow to obtain decorations with the most varied shapes.

For example, it is possible to envisage that said step of selectively depositing the edible compound can occur by means of screen printing or spray deposition.

The invention further provides the use of a compound according to one or more of the above-described aspects, for example all of the above-described aspects, for the decoration and/or the coating of a surface.

Thanks to such a solution, the invention provides a particularly versatile compound.

In particular, the (edible) compound according to the invention can be used indiscriminately in various fields of the art, thanks to its particular chemical-physical-mechanical properties, in particular so as to confer a particular aesthetic appeal to the surface, while maintaining the optical effect conferred on the product over time.

For example, the compound can be used to coat the surface of a frame, the surface of a door, a wall surface or other.

### BEST MODE TO IMPLEMENT THE INVENTION

The invention particularly provides an edible compound, particularly adapted to be used to make food decorations for use with both sweet and savoury preparations. Compound is intended as the union (i.e., mixture) of one or more solid substances and one or more liquid substances, processed together to form a homogeneous whole (or amalgam).

In particular, such compound can have a density comprised between 0.8 g/cm³ and 1.5 g/cm³, e.g. a density substantially preferably equal to 1g/cm³.

Firstly, the compound comprises a first fraction comprising one or more ingredients among: water and solvent.

For example, the first fraction can comprise ethyl alcohol and/or hexane as a solvent.

In particular, the first fraction can be present in a percentage by weight on the total weight of the compound comprised between 10% and 90%, e.g. preferably present in a percentage greater than 60%, preferably in a percentage by weight on the total weight of the compound comprised between 60% and 70%.

Preferably, the first fraction can comprise (e.g. only) water.

The first fraction is liquid (or substantially liquid).

The compound then comprises a second emulsifying fraction (i.e. with an emulsifying function), which allows to stabilise the emulsions by acting as a surfactant or stabiliser, thereby contributing to a homogeneous and stable compound over time.

Such a second (functionally) emulsifying fraction comprises one or more ingredients among lecithin, sucrose ester, polysorbate (e.g., commercially called tween 80), cellulose, arabic gum, vegetable fibre, monoglycerides or diglycerides of fatty acids.

Such a second fraction can be present in a percentage by weight on the total weight of the compound comprised between 0.01% and 5%.

Preferably, such a second emulsifying fraction comprises (e.g. only) polysorbate. Preferably such a polysorbate is present in a weight percentage on the total weight of the compound comprised between 0.005% and 0.015%.

The compound, then, comprises a third humectant and/or plasticising fraction, i.e., with a wetting and/or plasticising function, which is in particular configured to favour (i.e., allow) the maintenance over time of a desired consistency and possibly a consistency of the edible compound such that it can be plastically deformed (particularly mouldable after mechanical-plastic deformation).

Such a third fraction (humectant and/or plasticiser) can comprise one or more ingredients among: glycerol, sorbitol, propylene glycol, mannitol, oil (for example preferably vegetable oil) and fat.

By way of non-limiting example, such a third fraction can comprise as fat one or more among: cow butter, cocoa butter, palm butter, palm kernel butter, coconut butter, illipe butter, shea butter, vegetable margarine.

Again by way of non-limiting example, the third fraction can comprise as oil one or more among: sunflower oil, rapeseed oil, rice oil, palm oil, coconut oil, peanut oil, olive oil, grapeseed oil.

Further, preferably, such a third fraction can comprise vegetable oil (origin) consisting of a mixture or blend of oils of different botanical origins, of which particularly rapeseed, sunflower and rice.

In particular, the third fraction can be present in a percentage by weight on the total weight of the compound comprised between 0.01% and 5%.

Further, the edible compound comprises a fourth dyeing fraction (with a colouring function), i.e., configured to give the compound a desired colouring.

For example, such a fourth fraction can be particularly adapted to confer a gold or other metallic colouring to the edible compound.

Such a fourth fraction (dyeing) comprises at least one dye or colouring pigment.

In particular, such a fourth fraction (dyeing) can preferably comprise one or more ingredients, i.e. dyes or colouring pigments, among: potassium silicate and aluminium silicate, silicon dioxide, iron oxide, mica, brilliant blue FCF (CAS Number: 3844-45-9 or dye E133 according to Regulation EU231/2012), spirulina blue, gold and silver.

Although not explicitly mentioned, it should be noted that such a fourth fraction can possibly comprise any other dye or colouring pigments (suitable for food use), e.g., any other dye or colouring pigment belonging to the dye category according to Regulation EU231/2012 (including aluminium lacquer).

Preferably, the fourth fraction can comprise at least one (i.e. at least one dye or colouring pigment) among: silver, aluminium and mica.

The fourth fraction (dyeing) can be present in a weight percentage on the total weight of the compound comprised between 2% and 70%, e.g. greater than 20%, preferably in a weight percentage on the total weight of the compound comprised between 20% and 30%.

For example, in order to confer the special gold colouring to the compound, such a fourth (dyeing) fraction can comprise (e.g., only) iron oxide, mica and optionally one (for example preferably only one) among brilliant blue FCF or spirulina blue.

In particular, in order to confer such gold colouring to the compound, such a fourth (dyeing) fraction can comprise (e.g., only) iron oxide and mica together in a weight percentage on the total weight of the compound comprised between 20% and 25%, and in addition optionally brilliant blue FCF or spirulina blue in a weight percentage on the total weight of the compound comprised between 0.01% and 0.02%.

The compound further comprises a fifth fraction, which substantially has a thickening function, i.e., it confers consistency to the compound.

Such a fifth fraction can be solid, i.e., it can consist of ingredients in a solid state which are then mixed with the ingredients of the other fractions to make the edible compound. Such a fifth fraction comprises one or more ingredients among: a sugar, a starch (e.g., native or modified starch), shellac, beeswax, animal gelatine, fish gelatine, agar, guar gum, locust bean gum, tragacanth, cellulose, carrageenan, acacia gum, tara gum, gellan gum, xanthan gum, pectin, sodium alginate, calcium, potassium, ammonium, propan diol, calcium caseinate, sodium caseinate, vegetable protein isolate (i.e., of vegetable origin, e.g., from legumes), tapioca flour, carboxymethylcellulose, hydroxypropylmethylcellulose, vanillin (particularly in crystals).

For example, as sugar, the fifth component can comprise one or more among glucose, fructose, maltodextrin, sugar syrup and invert sugar.

Such a fifth fraction can be present in a weight percentage on the total weight of the compound comprised between 10% and 90%.

For example, preferably, the fifth fraction can be present in a percentage by weight on the total weight of the compound comprised between 5% and 15%.

In particular, the fifth fraction can comprise (e.g., only) xanthan gum, possibly (i.e., optionally) animal gelatine, vanillin and one among sodium caseinate or calcium caseinate. In particular, the fifth fraction can comprise (e.g., only) xanthan gum as a weight percentage on the total weight of the compound comprised between 0.5% and 1.5%, animal gelatine as a weight percentage on the total weight of the compound comprised between 7% and 9%, and calcium caseinate or sodium caseinate as a weight percentage on the total weight of the compound comprised between 0.2% and 7%.

Alternatively, the fifth fraction can comprise (e.g., only) xanthan gum as a weight percentage on the total weight of the compound comprised between 0.5% and 1.5%, and calcium caseinate or sodium caseinate as a weight percentage on the total weight of the compound comprised between 0.2% and 7%.

By way of example, three possible formulations of the compound according to the invention are shown in the table below, in particular for making a compound provided with a gold colouring, of which a formulation A, a formulation B and a formulation C.

| **FORMULATION A** | | |
|---|---|---|
| **INGREDIENTS** | **%** | **RELATIVE FRACTION** |
| WATER | 66.245 | FIRST FRACTION |
| POLYSORBATE | 0.01 | SECOND FRACTION |
| VEGETABLE OIL | 1.15 | THIRD FRACTION |
| IRON OXIDE + MICA | 24 | FOURTH FRACTION |
| BRILLIANT BLUE FCF | 0.015 | FOURTH FRACTION |
| VANILLIN | 1.78 | FIFTH FRACTION |
| XANTHAN GUM | 1.3 | FIFTH FRACTION |
| SODIUM CASEINATE | 5.5 | FIFTH FRACTION |

| **FORMULATION B** | | |
|---|---|---|
| **INGREDIENTS** | **%** | **RELATIVE FRACTION** |
| WATER | 63.577 | FIRST FRACTION |
| POLYSORBATE | 0.01 | SECOND FRACTION |
| VEGETABLE OIL | 1.0 | THIRD FRACTION |
| IRON OXIDE + MICA | 24.0 | FOURTH FRACTION |
| BRILLIANT BLUE FCF | 0.015 | FOURTH FRACTION |
| VANILLIN | 1.15 | FIFTH FRACTION |
| XANTHAN GUM | 1.3 | FIFTH FRACTION |
| ANIMAL GELATINE | 8.548 | FIFTH FRACTION |
| CALCIUM CASEINATE | 0.4 | FIFTH FRACTION |

| **FORMULATION C** | | |
|---|---|---|
| **INGREDIENTS** | **%** | **RELATIVE FRACTION** |
| WATER | 66.606 | FIRST FRACTION |
| POLYSORBATE | 0.009 | SECOND FRACTION |
| VEGETABLE OIL | 0.9 | THIRD FRACTION |
| IRON OXIDE + MICA | 22.0 | FOURTH FRACTION |
| BRILLIANT BLUE FCF | 0.015 | FOURTH FRACTION |
| VANILLIN | 1.0 | FIFTH FRACTION |
| XANTHAN GUM | 1.17 | FIFTH FRACTION |
| ANIMAL GELATINE | 8.0 | FIFTH FRACTION |
| CALCIUM CASEINATE | 0.3 | FIFTH FRACTION |

The above percentages are intended as percentages by weight on the total weight of the edible compound.

The invention further provides an edible sheet or edible decoration (or edible decorative element) obtained from the edible compound described above (i.e., according to one or more of the aspects described above).

The edible sheet or edible decoration (or decorative element) can in particular be adapted to be used for the decoration of food preparations, e.g., both sweet and savoury food preparations.

In particular, such an edible sheet can be cut or otherwise processed so as to obtain shapes of desired form to be applied to food preparations or other surfaces of various types.

For example, such an edible decoration (or edible decorative element) can be formed from a continuous shaped layer of desired form, or it can be formed from several shaped portions separated from each other but mutually arranged in space in a predefined manner to overall define a desired shape.

Such a food sheet or food decoration (e.g., each portion of the food decoration) can have a thickness comprised between 0.005 mm and 2 mm, e.g., preferably substantially equal to 0.050 mm.

The invention further provides a method for making an edible sheet or an edible decoration, e.g., as described above.

The method firstly envisages preparing an edible compound according to one or more (e.g., all) of the aspects described above.

In particular, such a step of preparing the edible compound envisages inserting the first fraction, the second fraction (emulsifying agent), the third fraction (humectant and/or plasticiser), the fourth dyeing fraction and the fifth fraction inside a container and mixing, e.g., by means of a mechanical stirrer, the various fractions until a homogeneous compound is obtained.

Preferably, such a step can envisage at first inserting all the ingredients of the fifth fraction except vanillin where present into the container or receptacle, then inserting the ingredients of the first fraction and the fourth fraction , then the ingredients of the second fraction and the third fraction, and lastly, where present, inserting the vanillin, e.g., mixing while adding the ingredients of the various fractions.

Next, the method envisages heating the edible compound obtained at a temperature comprised between 50°C and 90°C, e.g., preferably at a temperature comprised between 55°C and 80°C, for a time comprised between 5 and 25 minutes, e.g., a time comprised between 8 and 20 minutes.

Such a heating step can in particular occur in an oven.

The method, then, envisages (after the heating step) letting the edible compound rest (at room temperature, i.e., at a temperature generally comprised between 5°C and 35°C) for a period of time comprised between 2 and 30 hours, preferably for a period of time comprised between 2 and 24 hours.

Such a rest period is in particular aimed at bringing the edible compound to room temperature, i.e., to a temperature substantially comprised between 5°C and 35°C, in particular to a temperature comprised between 5°C and 19°C.

At such a temperature, the edible compound substantially has a solid state, in particular it can have a gelatinous consistency.

The method thus envisages obtaining the edible sheet or the edible decoration from the edible compound.

In particular, obtaining the edible sheet or the edible decoration envisages the step of processing the edible compound by means of a technique among extrusion, hot or cold rolling, pad printing or co-extrusion, calendering, to give the edible compound a desired shape (particularly the shape of the edible sheet or the edible decoration).

Possibly, obtaining said edible sheet or said edible decoration, further envisages, after the processing step of the compound, a drying or stabilisation step by means of dehydration and/or baking the shape made.

Such drying or stabilisation step by means of dehydration and/or baking is aimed in particular at removing excess moisture or solvent from the edible sheet or edible decoration. The invention further provides another method for making an edible sheet or an edible decoration, e.g., as described above.

Such a method firstly envisages preparing an edible compound according to one or more (e.g., all) of the aspects described above.

In particular, such a step of preparing the edible compound can envisage inserting the first fraction, the second fraction (emulsifying agent), the third fraction (humectant), the fourth (dyeing) fraction and the fifth fraction inside a container and mixing, e.g., by means of a mechanical stirrer, the various fractions until an edible compound is obtained (in which the various ingredients are homogeneously mixed).

Preferably, such a step can envisage inserting all the ingredients of the fifth fraction except vanillin where present into the container or receptacle, then inserting the ingredients of the first fraction and the fourth fraction into the container or receptacle, then the ingredients of the second fraction and the third fraction into the container or receptacle, and lastly, where present, inserting the vanillin into the container or vessel, e.g., mixing while adding the ingredients of the various fractions.

Next, the method envisages heating the edible compound obtained at a temperature comprised between 50°C and 90°C, e.g., preferably at a temperature comprised between 55°C and 80°C, for a time comprised between 5 and 25 minutes, e.g., a time comprised between 8 and 20 minutes.

Such a heating step can in particular occur in an oven.

The method envisages, after the heating step, letting the edible compound rest (at room temperature) for a period of time comprised between 2 and 30 hours, preferably for a period of time comprised between 2 and 24 hours.

During such rest period, the edible compound is brought to room temperature, e.g., by convection, i.e., to a temperature substantially comprised between 5°C and 35°C, in particular to a temperature comprised between 5°C and 19°C.

Next, the method envisages inserting the edible compound inside a container and mixing again, preferably by means of a mechanical stirrer (planetary mixer or similar).

In particular, the method can envisage mixing the edible compound so as to heat it, by mechanical stirring, to bring it to a temperature equal to or greater than 20°C.

At such a temperature, the edible compound has a liquid (or semi-liquid) state, in particular it can have a yoghurt-like consistency.

The method thus envisages obtaining the edible sheet or the edible decoration from the edible compound.

In particular, in order to obtain said edible sheet or said edible decoration the method can envisage selectively depositing the edible compound on a support, e.g., preferably a non-absorbent support, so as to confer a desired shape (in particular the shape of the edible sheet or edible decoration) to the compound.

Preferably, said (possibly non-absorbent) support can be made of silicone, paper, Teflon, metal, glass or combinations thereof.

The depositing step can alternatively occur by means of screen printing, spray deposition, preferably by means of screen printing, possibly hot.

Possibly, to obtain said edible sheet or said edible decoration, the method can further envisage, after the deposition step, a drying or stabilisation step by means of dehydration and/or baking of the shape made.

Such a drying or stabilisation step by means of dehydration and/or baking is aimed in particular at removing excess moisture or solvent.

The invention thus conceived is susceptible to several modifications and variations all falling within the scope of the inventive concept.

Moreover, all details can be replaced by other technically equivalent elements.

In practice, the materials used, as well as the contingent shapes and sizes, can be whatever according to the requirements without for this reason departing from the scope of protection of the following claims.

## Claims

1. Edible compound comprising:
- a first fraction comprising one or more ingredients among: water and solvent,
- a second fraction comprising one or more ingredients among lecithin, sucrose ester, polysorbate, cellulose, arabic gum, vegetable fibre, monoglycerides or diglycerides of fatty acids,
- a third fraction comprising one or more ingredients among: glycerol, sorbitol, propylene glycol and mannitol, oil and fat,
- a fourth dyeing fraction,
- a fifth fraction comprising one or more ingredients among: sugar, starch, shellac, beeswax, animal gelatine, fish gelatine, agar, guar gum, locust bean gum, tragacanth, cellulose, carrageenan, gum tragacanth, acacia gum, tara gum, gellan gum, xanthan gum, pectin, sodium alginate, calcium, potassium, ammonium, propan diol, calcium caseinate, sodium caseinate, vegetable protein isolate, tapioca flour, carboxymethylcellulose, hydroxypropylmethylcellulose, vanillin.

2. The compound according to claim 1, wherein the first fraction is present in a weight percentage on the total weight of the compound greater than 60%.

3. The compound according to claim 1, wherein the second fraction is present in a weight percentage on the total weight of the compound comprised between 0.01% and 5%.

4. The compound according to claim 1, wherein the third fraction is present in a weight percentage on the total weight of the compound comprised between 0.01 % and 5%.

5. The compound according to claim 1, wherein the fourth fraction is present in a weight percentage on the total weight of the compound comprised between 2% and 70%.

6. The compound according to claim 1, wherein the fifth fraction is present in a weight percentage on the total weight of the compound comprised between 10% and 90%.

7. The compound according to claim 1, wherein the fifth fraction comprises xanthan gum, vanillin and one among sodium caseinate and calcium caseinate.

8. The compound according to claim 1, wherein the fourth fraction is present in a weight percentage greater than 20%.

9. The compound according to claim 1, wherein the fourth fraction comprises one or more dyes and/or colouring pigments among: potassium silicate, aluminium silicate, silicon dioxide, iron oxide, mica, brilliant blue FCF, spirulina blue, aluminium, gold and silver.

10. The compound according to claim 1, wherein the fourth fraction comprises at least one dye or colouring pigment among: gold, silver, aluminium and mica.

11. Edible sheet, obtained from a compound according to claim 1.

12. The edible sheet according to the preceding claim, having a thickness comprised between 0.005 mm and 2 mm.

13. Method for making an edible sheet or edible decoration which envisages the successive steps of:
- preparing an edible compound according to claim 1,
- heating the edible compound obtained at a temperature comprised between 50°C and 90°C, for a time comprised between 5 and 25 minutes,
- letting the compound rest for a period of time comprised between 2 and 30 hours,
- obtaining the edible sheet or the edible decoration from the compound.

14. Method according to the preceding claim, wherein obtaining the edible sheet or the edible decoration envisages:
- a processing step of the edible compound by means of a technique among a technique among hot rolling, cold rolling, extrusion, calendering and pad printing, so as to give the edible compound a desired shape, and
- a subsequent step of drying and/or stabilisation by means of dehydration and/or cooking of the created shape.

15. Method for making an edible sheet or edible decoration which envisages the successive steps of:
- preparing an edible compound according to claim 1,
- heating the edible compound obtained at a temperature comprised between 50°C and 90°C for a time comprised between 5 and 25 minutes,
- letting the edible compound rest for a period of time comprised between 2 and 30 hours,
- mixing the edible compound again,
- obtaining the edible sheet or the edible decoration from the edible compound.

16. Method according to the preceding claim, wherein obtaining the edible sheet or the edible decoration envisages:
- the step of selectively depositing the edible compound on a substrate, to give the compound a desired shape, and
- a subsequent step of drying and/or stabilisation by means of dehydration and/or cooking of the created shape.

17. Use of the compound according to claim 1, for the decoration and/or coating of a surface.
